# EUROPEAN PATENT APPLICATION

(11) **EP 1 024 290 A1**
(43) Date of publication of application: **02.08.2000**
(21) Application number: 00300641.8
(22) Date of filing: 28.01.2000
(51) Int. Cl.: F04C 29/00, B01D 45/12, B04C 5/13, B04C 9/00

(54) **Vacuum pump systems**

(30) Priority: 29.01.1999 GB 9902083
(71) Applicant: The BOC Group plc, Windlesham Surrey GU20 6HJ (GB)
(72) Inventor: Seeley, Andrew James, Dr., Bristol BS8 1NB (GB)
(74) Representative: Bousfield, Roger James

(57) **Abstract**

A vacuum pump system including a dry vacuum pump having pulsed gas flow characteristics at its exhaust and particle handling means attached to the pump exhaust, wherein the particle handling means is designed to operate on the basis of the instantaneous or peak gas flow rate.

## Description

This invention relates to vacuum pump system and in particular to ones including particle handling means.

A typical oil free or dry pump, ie one having an oil free swept volume, is disclosed and described in our British patent Specification No. 2,088,957. The particular pump described therein can comprise a plurality of, for example four, pumping chambers, each containing intermeshing pairs of rotors to effect a pumping action. Some of the chambers, particularly the one at the pump inlet, can have rotors of the 'Roots' type whereas other can have rotors of the 'Claw' type. Shafts for driving the rotor pairs are interconnected by meshing gears enclosed in a housing at one end of the pump casing, one of the shafts extending beyond the housing for connection to a prime mover such as an electric motor. The housing, and the seals relating thereto, are such that oils or lubricants associated with the gears, etc. are prevented from leaking into the pumping chambers.

Oil free, multi-stage mechanical pumps of this type can generally provide a high volumetric pumping efficiency and are normally capable of evacuating an enclosure to a pressure of the order of 10⁻² torr.

The absence of lubricant within the pumping chambers of such pumps makes them more suitable for applications where a dust or particle laden gas has to be pumped from an enclosure. Any such lubricants present in the pumping chamber would act as a "scrubber" for such contaminants and can produce an abrasive slurry effective to induce rapid and excessive wear on the pump internal surfaces.

Dry vacuum pumps are currently employed in many industrial processes including for example, plasma enhanced chemical vapour deposition (PECVD) processes in the semiconductor industry in which exhaust gas streams from a high vacuum process chamber have a high particulate loading.

Although dry pumps can generally evacuate such chambers and handle such particle laden gas stream, there can nonetheless be problems due to blockage of downstream pipework, increased maintenance fumes and the like. Furthermore, with certain types of particle in the exhaust gas stream, safety hazards may arise due to uncontrolled accumulation of the particles or to the release of particles in to the atmosphere.

Dry vacuum pump mechanisms, including those of the Roots and Claw intermeshing rotor variety, the gas flow in the exhaust of the pump or of any stage thereof may be pulsed by virtue of the mechanism itself. Such pulsing occurs due to specific volumes of exhaust gas being expelled through the exhaust when the exhaust port is uncovered or opened; thereafter the flow falls rapidly as the exhaust port opens further.

Such pulsing is well known to users of the vacuum pumps and is most pronounced in pumps with Claw rotor stages or with pumps with a Claw rotor stage at the pump outlet in particular; however, it also occurs with other types of mechanism including Roots rotor stages arranged for exhaust port valving, ie the Roots rotors are arranged relative to exhaust port(s) in the pump body such that discrete pulsed volumes of gas are exhausted through the port(s), and also including screw mechanism pumps in which a certain level of pulsing occurs at the exhaust end of the pump.

The invention is concerned with a new type of pump system incorporating a dry pump together with a particle handling feature.

In accordance with the invention, there is provided a vacuum pump system including a dry vacuum pump having pulsed gas flow characteristics at its exhaust and particle handling means attached to the pump exhaust, wherein the particle handling means is designed to operate on the basis of the instantaneous or peak gas flow rate.

The invention is based on the surprising discovery that the design, in particular the sizing, of the particle handling means on the basis of instantaneous exhaust gas flow rates allow the particle handling means to be operated by the inherent energy of the gas pulses. Previous attempts to handle particles entrained in exhaust gas stream by means of particle handling means attached to a vacuum pump exhaust have failed due primarily to the design of particle handling means being based on average gas flow rates through the pump exhaust.

Preferably the pump mechanism at the pump exhaust is a Claw mechanism.

The particle handling means may be positioned at the exhaust of a single or multi-stage vacuum pump or may be positioned at the outlet of an earlier (up-stream) stage of a multi stage vacuum pump. In the latter case, the cleansed gas stream will advantageously be returned to the pump at the inlet to a subsequent (down-stream) stage.

Preferably, the particle handling means comprises a cyclone. In a cyclone, the dust laden gas stream exhausted from the vacuum pump (or vacuum stage) enters a cylindrical or conical chamber tangentially at one or more points and leaves through a central opening, normally at the top of the chamber. The particles, by virtue of their inertia and by centrifugal force, will tend to move to the outside of the chamber wall from which they are led, for example by gravitational force into a particle receiver usually positioned at the bottom end of the chamber.

Sizing of the cyclone (or other form of particle handling means) is an important aspect of the invention. Cyclones are usually sized to suit the flow of gas therethrough. By 'sizing' is meant the determination of the physical dimensions of the cyclone, in particular inlet orifice dimension, longitudinal length of the cyclone chamber, diameter of the cyclone chamber, degree of conicity of the cyclone chamber (if any) and outlet orifice dimension, to suit the anticipated overall gas flow through the cyclone.

However, it has been found that there are particular problems associated with the potential use of cyclones to treat particles entrained in gas flows through vacuum pumps, in particular those arising from the very low flow rates through the pumps in many applications. As a result, it was found that cyclones (and other particle handling means) tried to handle the average flow of gas did not generally operate. However, when sized for the instantaneous or maximum flow rate associated with a vacuum pump pulse, it was found that the particle handling means operated to good effect, for example for the removal of particles as low as between 1 and 10 µm at efficiencies of the order of 80 to 90%.

Determination of the pressure pulses at the outlet of a vacuum pump (or stage) can be made using a fast acting pressure transducer and associated storage oscilloscope from the results of which the instantaneous flow rate can be established.

Generally the cyclone (or other particle handling means) should be positioned as close as possible to the vacuum pump outlet so as to maximise the pulsed gas flow at the cyclone inlet.

In other embodiments, the vacuum pump system of the invention comprises a multi-stage vacuum pump and the particle handling means is connected at an inter-stage position of the pump. In such embodiments, the (gas) outlet of the particle handling means is preferably connected to a stage of the vacuum pump subsequent to this inter-stage position, ie a stage closer to the pump exhaust.

As such, systems in accordance with these embodiments offer the advantage of preventing, or at least minimising adherence of certain types of particle on the internal walls of the pump which might otherwise occur at the higher pressures towards the pump outlet.

In such embodiments, the mechanism in the pump inter-stage connected to the cyclone inlet is preferably a Claw mechanism.

For a better understanding of the invention, reference will now be made, by way of exemplification only, to the accompanying drawings which:
Figure 1 is a schematic representation of a vacuum pump system of the invention.
Figure 2 is a perspective view of the inside of a vacuum pump for use in the system of Figure 1.
Figure 3 is a schematic sectional view through a cyclone for use in the system of Figure 1.
Figure 4 is a diagrammatic representation of a vacuum pump system of the invention showing the relative dimensions therein.
Figure 5 is a schematic representation of an alternative vacuum pump system to that shown in Figure 1.

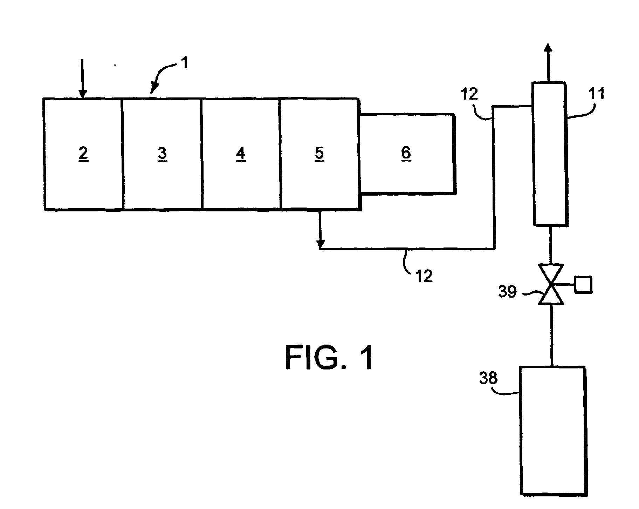

With reference to the drawings, there is shown in Figure 1 a vacuum pump system of the invention comprising a vacuum pump 1 having four separate stages 2, 3, 4, 5 in each of which is a pair of intermeshing rotors, one rotor of each pair being mounted on a first shaft and the other rotor of each pair being mounted as a second rotor. Stage 2 is at the pump inlet and stage 5 is at the pump outlet. The rotors in the inlet stage 2 are a pair of Roots rotors whereas those in each of the stages 3, 4, 5 are Claw rotors. In operation of the pump the shafts, and hence the rotors, are rotated at high speed in opposite directions by means of a motor and gears contained in a housing/gear box 6, all in a manner known per se to effect a general gas flow in the direction of the arrowed lines.

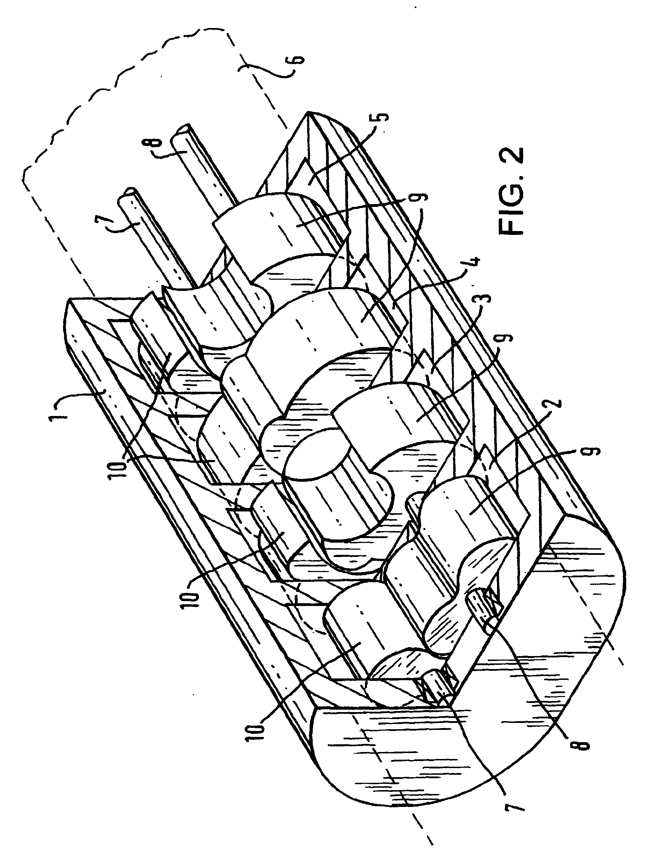

The shafts 7, 8 and the rotors 9, 10 of each pair are shown in Figure 2.

A particle handling means in the form of a cyclone 11 is connected to the exhaust line 12 from the fourth stage 5 at the outlet end of the vacuum pump 1.

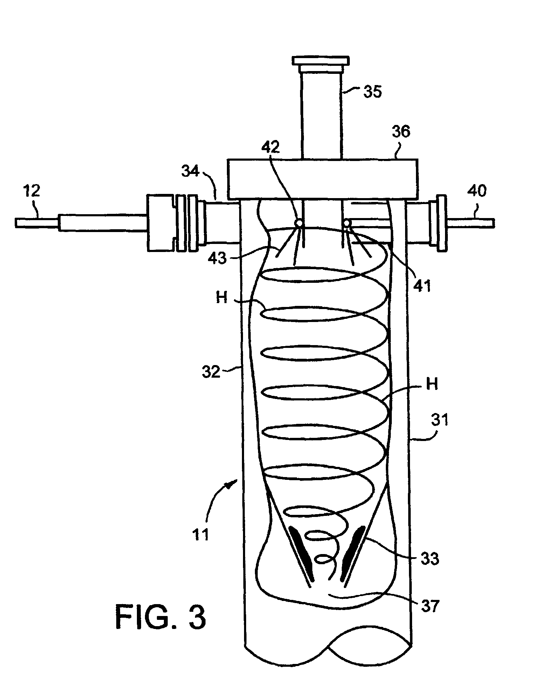

The cyclone 11 is shown in more detail in Figure 3 and comprises a hollow cyclone body 31 having a cylindrical portion 32 and a conical portion 33. Gas from the exhaust line 12 from the vacuum pump 1 enters the cyclone via the cyclone inlet 34 tangentially to the cylindrical portion 32. The gas flow therefore tends to be in the form of a helix H in a general downward direction by virtue of the size and shape of the body 1, especially that of the cylindrical portion 32 and the conical portion 33 during which flow entrained particles tend to be urged by centrifugal forces against the side of the portions 32, 33.

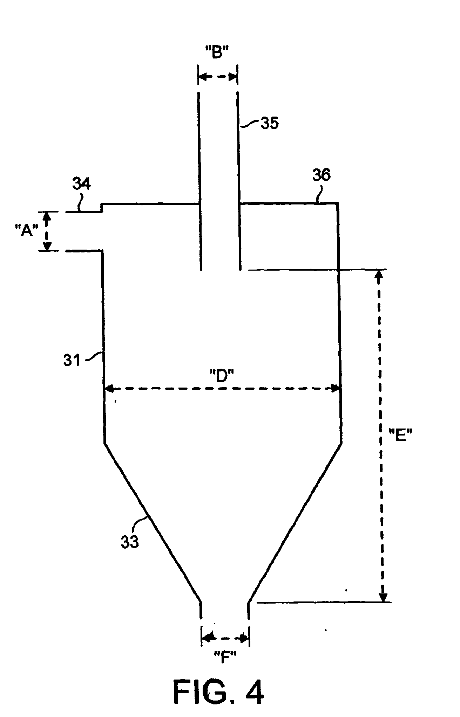

A gas outlet 35 in the form of a tube set in to an upper wall 36 of the cyclone body 31 allows gas to exit the body 31. The gas outlet 35 may have a downwardly extending portion - see Figure 4 - positioned such that the outlet itself is at the base of this portion at a longitudinal position below that of the tangential cyclone inlet 34.

A particle outlet 37 in the base of the conical portion 33 allows particles to exit the body 31 under gravitational force and be collected in a container 38. The container 38 can be disengaged from the system and a valve 38 is present to do this. Alternatively the exit from the cyclone may be at the bottom of the cyclone ( not shown). In this case the dust is separated from the gas by passing through an annular slit while allowing the gas to flow through a more central path.

In use of the system, gas pulses formed by the Claw stage rotors in stages 3, 4 and especially 5 enter the cyclone inlet 34 and set up a vortex gas flow within the body 31 in both the cylindrical portion 32 and moreover in the conical portion 33 in which entrained particles are urged against the wall of the body 31 and either remain on the wall or fall therefrom under gravitational forces towards the outlet 36. Gas exits the cyclone via the outlet 35.

The relative dimensions of the cyclone components are important and advantageously the diameter A of the inlet 34 and the diameter B of the outlet 35 are both half that of the diameter D cylindrical portion 32. In addition it is preferred that the longitudinal length of E of the cylindrical portion 32 plus the conical portion 33 is twice or three times, for example 2.5 times, that of the diameter D of the cylindrical portion 32 The diameter F of the particle outlet 37 is preferably about 0.35 to 0.4, for example 0.375, times the diameter D of the cylindrical portion 32. These relative dimensions are shown in Figure 4.

Equally important is the overall sizing of the cyclone dimensions to suit the instantaneous flow (or maximum flow) from the vacuum pump (or stage) to which the cyclone is connected.

The particles exiting the chamber 31 via the outlet 36 pass to a particle collection chamber 37 via the open valve 38 from which they can be removed from time to time when the valve 38 has been closed.

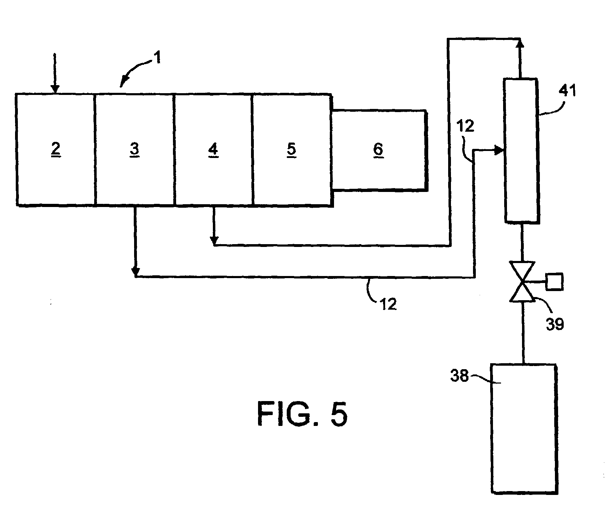

In an alternative vacuum pump system to that of Figure 1, there is shown in Figure 5 a system in which a particle handling means again in the form of a cyclone 41 is connected at an interstage position of a multi-stage vacuum pump 1, in particular between the stages 3 and 4 so that the inlet to the cyclone 41 is connected to the outlet of stage 3. In addition the outlet of the cyclone 41 is preferably connected to the inlet of stage 4 of the pump 1. In this alternative system the collection of particles in the cyclone 41 avoids the potential problems associated with certain types of particle adhering to the pump walls as the pressure in the pump increases towards its outlet. In this alternative system, the mechanism in the stage connected to the cyclone inlet is advantageously a Claw mechanism.

The other reference numerals of Figure 5 are the same as those shown in Figure 1.

## Claims

1. A vacuum pump system including a dry vacuum pump having pulsed gas flow characteristics at its exhaust and particle handling means attached to the pump exhaust, wherein the particle handling means is designed to operate on the basis of the instantaneous or peak gas flow rate.

2. A vacuum pump system according to Claim 1 in which the particle handling means comprises a cyclone.

3. A vacuum pump system according to Claim 1 or Claim 2 in which the particle handling means is positioned as close as possible to the vacuum pump exhaust.

4. A vacuum pump system according to any preceding claim in which the pump mechanism at the pump exhaust is a Claw mechanism.

5. A vacuum pump system according to any preceding claim in which the particle handling means is connected at a inter-stage position of a multi-stage vacuum pump.

6. A vacuum pump system according to Claim 5 in which the inter-stage mechanism is a Claw mechanism.

7. A vacuum pump according to Claim 5 or Claim 6 in which the outlet of the particle handling means is connected to a stage of the vacuum pump subsequent to the inter-stage position.
